(19)

Europäisches
Patentamt
European
Patent Office
Office européen
des brevets

(11) **EP 2 416 032 A1**

(12) **EUROPEAN PATENT APPLICATION**
published in accordance with Art. 153(4) EPC

(43) Date of publication:
**08.02.2012 Bulletin 2012/06**

(21) Application number: **09843076.2**

(22) Date of filing: **16.12.2009**

(51) Int Cl.:
**F16F 1/36** (2006.01)   **F16F 1/37** (2006.01)
**F16F 9/54** (2006.01)   **F16F 15/08** (2006.01)

(86) International application number:
**PCT/JP2009/070979**

(87) International publication number:
**WO 2010/116571 (14.10.2010 Gazette 2010/41)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **30.03.2009 JP 2009082724**

(71) Applicant: **Toyo Tire & Rubber Co. Ltd.
Osaka-shi, Osaka 550-8661 (JP)**

(72) Inventors:
• **ISEKI,Seiji
Osaka-shi
Osaka 550-8661 (JP)**

• **MIMURA,Yoshio
Osaka-shi
Osaka 550-8661 (JP)**
• **AKASAKA,Kuniyoshi
Osaka-shi
Osaka 550-8661 (JP)**

(74) Representative: **Sajda, Wolf E. et al
Meissner, Bolte & Partner GbR
Postfach 86 06 24
D-81633 München (DE)**

(54) **CYLINDRICAL ELASTIC MEMBER, STRUT MOUNT, AND PRODUCTION METHOD FOR SAID STRUT MOUNT**

(57)    A cylindrical elastic member for connecting an inner cylindrical section attached to an operating axis as an axial center to an outer cylindrical section arranged outside the inner cylindrical section concentrically therewith, so as to be apart from the inner cylindrical section and surround the section, the member comprising a non-foamed elastic body and a foamed elastic body, about which in a contacting-surface of the member with the inner cylindrical section, at least a contacting-surface area with an outer circumferential end-region of the inner cylindrical section comprises the non-foamed elastic body, and in a contacting-surface of the member with the outer cylindrical section, at least contacting-surface areas with both operating-axis-direction inside surfaces of the outer cylindrical section each comprise the foamed elastic body.

FIG.1

EP 2 416 032 A1

**Description**

Technical Field

The present invention relates to a cylindrical elastic member usable as a strut mount, an upper support, a bound stopper, and other elastic members for vibration proof devices; a strut mount; and a production method for the strut mount.

Background Art

For example, in a suspension of a car, a vibration proof device having elastic members is arranged to regulate elastically the displacement amount generated between its car body and its wheels. For the elastic members, rubber is generally used. In recent years, for the elastic members, there has been generated a tendency that foamed polyurethane is used instead of rubber in order to make vibration proof devices light, prevent abnormal sounds generated when the elastic members, which the vibration proof devices include, are compressed to be deformed, and attain some other purpose (see for example, Patent Documents 1 and 2 listed below).

However, the foamed-polyurethane-including vibration proof devices described in these Patent Documents have a tendency that the foamed polyurethane is hydrolyzed with the passage of time by effects based on the adhesion of water at the time when the car runs or some other time, and water in the air. As a result, the foamed polyurethane tends to deteriorate in elastic properties, and further be broken.

Patent Document 3 listed below describes, as a foamed polyurethane, a foamed polyurethane obtained by foaming and curing a foamable composition containing, as essential component, a fluorine-containing water repellent agent as well as a polyester polyol, a polyisocyanate, and a foaming agent. The largest characteristic of this foamed polyurethane is the use of the fluorine-containing water repellent agent as one of the essential components. In the invention described in Patent Document 3, the above-mentioned structure aims to improve the hydrolysis resistance of the foamed polyurethane,

However, the foamed polyurethane described in Patent Document 3 contains the polyester polyol as one of the essential components; thus, the polyurethane is still hydrolyzed with ease. Additionally, when the foamed polyurethane described in this patent document is locally strained in a vibration proof device, the polyurethane is easily cracked or broken. Thus, the foamed polyurethane has a problem about endurance. In any vibration proof device having the foamed polyurethane described in this patent document, there is also a room for a further improvement in damping property.

Prior Art Documents

Patent Documents

Patent Document 1: JP-A-2002-264622
Patent Document 2: JP-A-2003-184937
Patent Document 3: JP-A-2004-293697

Summary of the Invention

Problems to be Solved by the Invention

In light of the above-mentioned actual situation, the present invention has been made. An object thereof is to provide a cylindrical elastic member and a strut mount that are each excellent in damping property and endurance, and a method for producing this strut mount.

Means for Solving the Problems

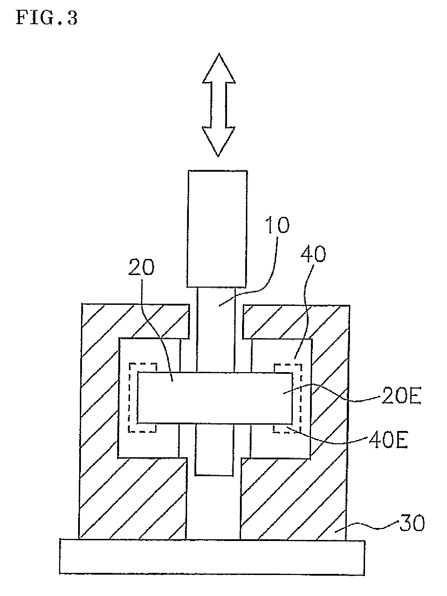

In order to solve the problems, the inventors have repeatedly made an endurance test of a vibration proof device, as illustrated in FIG. 3, the device having a cylindrical elastic member 40 for connecting an inner cylindrical section 20 attached to an operating axis 10 as an axial center to an outer cylindrical section 30 arranged outside the inner cylindrical section 20 concentrically therewith so as to be apart from the inner cylindrical section 20 and surround the section 20.

As a result, the inventors have found out the following: in a surface of the cylindrical elastic member 40 which contacts the inner cylindrical section 20, in particular, in a contacting-surface area 40E which contacts an outer circumferential end-region 20E of the inner cylindrical section 20, strain is easily concentrated; when the shape of a cross section of the inner cylindrical section 20 is, in particular, a rectangular, strain is easily concentrated into corner regions thereof; and thus this contacting-surface area 40E is easily cracked. The present invention has been made on the basis of results of this investigation. The present invention has the following subject matters to attain the above-mentioned object.

That is, the present invention relates to a cylindrical elastic member for connecting an inner cylindrical section attached to an operating axis as an axial center to an outer cylindrical section arranged outside the inner cylindrical section concentrically therewith, so as to be apart from the inner cylindrical section and surround the section, the member comprising a non-foamed elastic body and a foamed elastic body, about which in a contacting-surface of the member with the inner cylindrical section, at least a contacting-surface area with an outer circumferential end-region of the inner cylindrical section comprises the non-foamed elastic body, and in a contacting-surface of the member with the outer cylindrical section, at least contacting-surface areas with both operating-axis-direction inside surfaces of the outer cylindrical section each comprise the foamed elastic body.

The cylindrical elastic member according to the present invention is a member comprising a non-foamed elastic body and a foamed elastic body, and in a contacting-surface of the member with the inner cylindrical section, at least a contacting-surface area with an outer circumferential end-region of the inner cylindrical section comprises the non-foamed elastic body. This non-foamed elastic body is higher in elasticity than the foamed elastic body, and further hardly contains bubbles, which may turn starting points for the generation of cracking. For this reason, in the contacting-surface of the cylindrical elastic member with the inner cylindrical section, the contacting-surface area with the outer circumferential end-region of the inner cylindrical section, this area being an area where strain is easily concentrated, can be prevented from being cracked.

As a result, the cylindrical elastic member according to the present invention has an excellent endurance. Additionally, about the cylindrical elastic member according to the present invention, in a contacting-surface of the member with the outer cylindrical section, at least contacting-surface areas with both operating-axis-direction inside surfaces of the outer cylindrical section each comprise the foamed elastic body. In the case where the contacting-surface areas of the cylindrical elastic member with both of the operating-axis-direction inside surfaces of the outer cylindrical section each comprise the foamed elastic body, the cylindrical elastic member exhibits a uniform damping property for the outer cylindrical section and the inner cylindrical section. As a result, the cylindrical elastic member according to the present invention has an excellent damping property.

In the above cylindrical elastic member, it is preferred that the whole of the contacting-surface of the member with the inner cylindrical section comprises the non-foamed elastic body. According to this structure, the whole of the contacting-surface of the member with the inner cylindrical section, where strain is easily concentrated, comprises the non-foamed elastic body; thus, the cylindrical elastic member can be more effectively prevented from being cracked.

In the above cylindrical elastic member, it is preferred that contacting-surfaces of the non-foamed elastic body and the foamed elastic body between these bodies extend substantially perpendicularly to the direction of the operating axis. According to this structure, stain applied to the contacting-surfaces of the non-foamed elastic body and the foamed elastic body therebetween is made uniform, so that the cylindrical elastic member can be in particular effectively prevented from being cracked.

In the above cylindrical elastic member, it is preferred that the non-foamed elastic body and the foamed elastic body are bonded to each other by themselves. According to this structure, no adhesive layer is required between the non-foamed elastic body and the foamed elastic body, so that the following are not caused: the cylindrical elastic member is cracked from a starting point in an adhesive layer; and the cylindrical elastic member is deteriorated in damping property by an adhesive layer. As a result, the cylindrical elastic member is improved in damping property and endurance with a particularly good balance.

In the above cylindrical elastic member, it is preferred that the following is satisfied: $0.4H \leqq H1 \leqq 0.9H$ in which H represents the height, in the operating axis direction, from the contacting-surface area with any one of the operating-axis-direction inside surfaces of the outer cylindrical section to the contacting-surface of the member with the inner cylindrical section, and H1 represents the height, in the operating axis direction, from the contacting-surface area with the operating-axis-direction inside surface of the outer cylindrical section to the contacting-surface of the non-foamed elastic body and the foamed elastic body therebetween. According to this structure, the cylindrical elastic member is improved in damping property and endurance with a better balance.

The present invention also relates to a strut mount, comprising an inner cylindrical section attached to an operating axis as an axial center, an outer cylindrical section arranged outside the inner cylindrical section concentrically therewith, so as to be apart from the inner cylindrical section and surround the section, and a cylindrical elastic member comprising a non-foamed elastic body and a foamed elastic body to connect the inner cylindrical section and the outer cylindrical section to each other, the cylindrical elastic member being a cylindrical elastic member about which in a contacting-surface of the member with the inner cylindrical section, at least a contacting-surface area with an outer circumferential end-region of the inner cylindrical section comprises the non-foamed elastic body, and in a contacting-surface of the member with the outer cylindrical section, at least contacting-surface areas with both operating-axis-direction inside surfaces of the outer cylindrical section each comprise the foamed elastic body.

In the strut mount according to the present invention, its inner cylindrical section and its outer cylindrical section are connected to each other through a cylindrical elastic member comprising a non-foamed elastic body and a foamed elastic body. As described above, this cylindrical elastic member is excellent in not only damping property but also endurance; thus, the strut mount having this cylindrical elastic member is also excellent in not only damping property but also endurance.

In the above strut mount, it is preferred that the whole of the contacting-surface of the member with the inner cylindrical section comprises the non-foamed elastic body, that contacting-surfaces of the non-foamed elastic body and the foamed elastic body between these bodies extend substantially perpendicularly to the direction of the operating axis, and that the following is satisfied: $0.4H \leqq H1 \leqq 0.9H$ in which H represents the height, in the operating axis direction, from the contacting-surface area with any one of the operating-axis-direction inside surfaces of the outer cylindrical section to the contacting-surface of the member with the inner cylindrical section, and H1 represents the height, in the operating axis direction, from the contacting-surface area with the operating-axis-direction inside surface of the outer cylindrical section to the contacting-surfaces of the non-foamed elastic body and the foamed elastic body therebetween. According to these structures, the strut mount is particularly excellent in damping property and endurance.

The present invention also relates to a method for producing a strut mount which comprises an inner cylindrical section attached to an operating axis as an axial center, an outer cylindrical section arranged outside the inner cylindrical section concentrically therewith, so as to be apart from the inner cylindrical section and surround the section, and a cylindrical elastic member comprising a non-foamed elastic body and a foamed elastic body to connect the inner cylindrical section and the outer cylindrical section to each other, the method comprising: a first step of forming the non-foamed elastic body to make at least a contacting-surface area of the member with an outer circumferential end-region of the inner cylindrical section, and a second step of forming the foamed elastic body to make at least contacting-surface areas of the member with both operating-axis-direction inside surfaces of the outer cylindrical section. According to this production method, a strut mount excellent in damping property and endurance can be effectively produced.

In the above method for producing a strut mount, it is preferred that the second step is a step in which after the formation of the non-foamed elastic body, the foamed elastic body is formed while the foamed elastic body and the non-faamed elastic body are bonded to each other by themselves. According to this manner, it is unnecessary to form any adhesive layer when the non-foamed elastic body and the foamed elastic body are bonded to each other. Thus, a strut mount can be produced wherein deterioration caused by an adhesive layer in damping property and endurance can be prevented. Additionally, the step of forming an adhesive layer can be omitted, so that the productivity of the strut mount is improved.

Brief Description of the Drawings

FIG. 1    is an example of sectional views illustrating a strut mount according to the present invention.
FIG. 2    is an example of perspective sectional views illustrating a cylindrical elastic member according to the present invention.
FIG. 3    is an example of sectional views illustrating spots that are easily cracked in a conventional cylindrical elastic member set to a vibration proof device.

Mode for Carrying Out the Invention

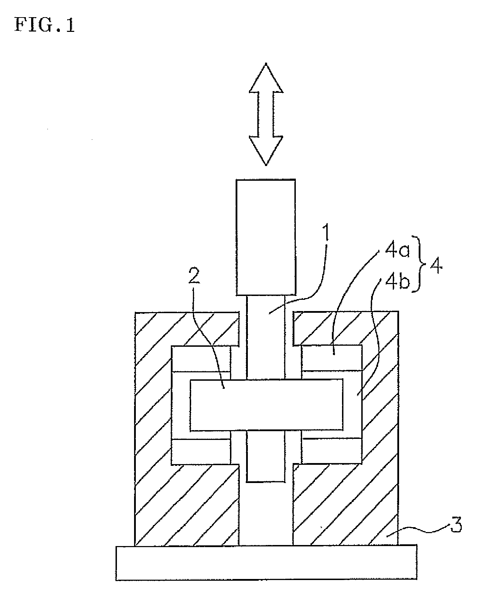

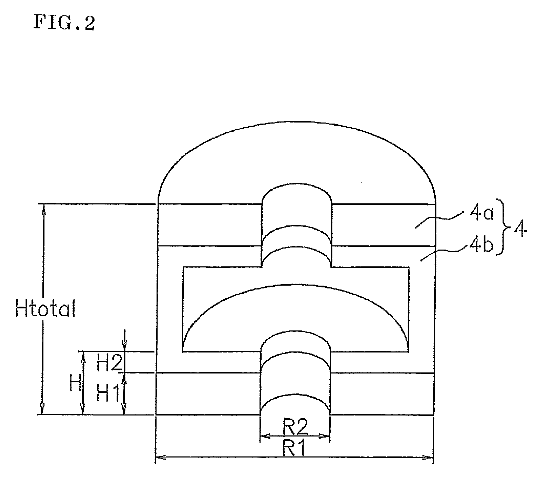

Hereinafter, embodiments of the present invention will be described. FIG. 1 is an example of sectional views illustrating a strut mount according to the present invention. FIG. 2 is an example of perspective sectional views illustrating a cylindrical elastic member according to the present invention.

As illustrated in FIG. 1, the cylindrical elastic member according to the present invention, which is a cylindrical elastic member 4, is a member for connecting an inner cylindrical section 2 attached to an operating axis 1 as an axial center to an outer cylindrical section 3 arranged outside the inner cylindrical section 2 concentrically therewith so as to be apart from the inner cylindrical section 2 and surround the section 2.
The cylindrical elastic member 4 according to the present embodiment causes the inner and outer cylindrical section 2 and 3 to be connected to each other by sandwiching the inner cylindrical section 2 from both side of the section 2 in the direction of the operating axis, and simultaneously internal-contacting the internal circumferential surface of the outer cylindrical section 3, and both operating-axis-direction inside surfaces of the section 3.

The cylindrical elastic member 4 according to the present invention has a non-foamed elastic body 4b and foamed elastic bodies 4a. In a contacting-surface of the member 4 with the inner cylindrical section 2, at least a contacting-surface area with an outer circumferential end-region of the inner cylindrical section 2 is made of the non-elastic body 4b. In a contacting-surface (of the member 4) with the outer cylindrical section 3, at least contacting-surface areas with both the operating-axis-direction inside surfaces of the outer cylindrical section 3 are made of the foamed elastic bodies 4a, respectively.

As illustrated in FIGS. 1 and 2, in the cylindrical elastic member 4 according to the embodiment, the whole of the contacting-surface with the inner cylindrical section 2 is made of the non-foamed elastic body 4b. According to this structure, the whole of the contacting-surface with the inner cylindrical section 2, in which strain is easily concentrated, is made of the non-foamed elastic body 4b, so that the cylindrical elastic member 4 can be more effectively prevented from being cracked.

As illustrated in FIGS. 1 and 2, the cylindrical elastic member 4 according to the embodiment is formed in such a manner that contacting-surfaces of the non-foamed elastic body 4b and the foamed elastic bodies 4a between the body 4b and bodies 4a extend substantially perpendicularly to the operating axis direction. The non-foamed elastic body 4b is bonded to the foamed elastic bodies 4a by themselves. This structure uniformizes strain applied to the contacting-surfaces between the non-foamed elastic body 4b and the foamed elastic bodies 4a so as to make it possible to prevent the cylindrical elastic member 4 particularly effectively from being cracked and further remove a bad effect produced in the case of laying an adhesive layer.

The cylindrical elastic member 4 according to the embodiment is formed to satisfy $0.4H \leqq H1 \leqq 0.9H$ wherein H represents the height, in the operating axis direction, from the contacting-surface area of the member 4 with any one of both the operating-axis-direction inside surfaces of the outer cylindrical section 3 to the (concerned) contacting-surface of the member 4 with the inner cylindrical section 2; and H1 represents the height, in the operating axis direction, from the contacting-surface area of the member 4 with the one operating-axis-direction inside surface of the outer cylindrical section 3 to the contacting-surfaces of the non-foamed elastic body 4b and the (concerned) foamed elastic body 4a between the body 4b and the bodies 4a. This structure makes it possible to make a further improvement in the damping property and the endurance of the cylindrical elastic member 4 with a good balance.

Each of the foamed elastic bodies 4a, which is one of the constituting materials of the cylindrical elastic member 4 according to the present invention, is sufficient to be a foamed elastic body 4a having independent bubbles to some degree. Specifically, an example thereof is a foamed elastic body 4a having an independent bubble percentage of 70 to 98 %. The specific gravity of the foamed elastic body 4a is, for example, from 0.40 to 0.8.

The material which constitutes the foamed elastic body 4a is not particularly limited. In order to make the foamed elastic body 4a better in endurance and damping property while the weight thereof is made light, the foamed elastic body 4a is preferably a foamed elastic body 4a obtained from a thermoplastic polyurethane as a raw material. Hereinafter, a description will be made about the foamed elastic body 4a obtained from a thermoplastic polyurethane as a raw material.

The foamed elastic body 4a, which is obtained from a thermoplastic polyurethane as a raw material, may be produced by a known method. In the present invention, however, the foamed elastic body 4a is preferably produced by a method of mixing an unreactive gas in a supercritical state with a thermoplastic polyurethane composition in a melting state to yield an unreactive-gas-dissolved thermoplastic polyurethane composition, and then subjecting this composition to injection molding.

The foamed elastic body 4a produced by this method (supercritical foamed elastic body) is in an evenly foamed state and further has a high independent bubble percentage; thus, the body is excellent in not only damping property but also endurance.

The thermoplastic polyurethane composition is not particularly limited as far as the composition is a composition made mainly of a thermoplastic polyurethane. In the present invention, however, the thermoplastic polyurethane composition is preferably a composition containing the following: a thermoplastic polyurethane synthesized by using, as essential components, at least one polyol from polyether polyols, polylactone polyols and polycarbonate polyols, and a polyisocyanate; and an isocyanate-terminated prepolymer synthesized by using, as essential components, a polyether polyol and a polyisocyanate. In a supercritical foamed elastic body yielded by using, as raw material, this thermoplastic polyurethane composition, which contains the thermoplastic polyurethane and the isocyanate-terminated prepolymer acting as a crosslinking agent, a three-dimensional crosslinked structure is expressed.

As a result, this supercritical foamed elastic body is excellent in resistance against permanent set-in fatigue (or settling). When the thermoplastic polyurethane to be used (in the thermoplastic polyurethane composition) is synthesized by using, as essential components, at least one polyol from polyether polyols, polylactone polyols and polycarbonate polyols and a polyisocyanate, and further the isocyanate-terminated prepolymer (to be used therein) is synthesized by using, as essential components, a polyether polyol and a polyisocyanate, a supercritical foamed elastic body obtained from the thermoplastic polyurethane composition, which contains these components as raw materials, is excellent in hydrolysis resistance. As a result, the cylindrical elastic member 4 having this supercritical foamed elastic body is excellent in endurance.

Examples of the above-mentioned polyether polyols include polypropylene glycol, polytetramethylene glycol, and polyhexamethylene glycol and the like. Examples of the polylactone polyols include polycaprolactone glycol, polypropiolactone glycol, and polyvalerolactone glycol and the like. Examples of the polycarbonate polyols include polyols each yielded by dealcoholization reaction between a polyhydric alcohol, such as ethylene glycol, propylene glycol, butanediol, pentanediol, hexanediol, octanediol or nonanediol, and diethylene carbonate, dipropylene carbonate or some other carbonate. The polyether polyols, the polylactone polyols, or the polycarbonate polyols are used alone or in the form of a mixture of two or more thereof.

Examples of the polyisocyanate include diphenylmethanediisocyanate, toluenediisocyanate, naphthalenediisocyanate, dimethyldiphenyldiisocyanate, hexaznethylenediisocyanate, trimethylhexamethylenediisocyanate, phenylenediisocyanate, dicyclohexylmethanediisocyanate, xylenediisocyanate, and isophoronediisocyanate. These polyisocyanates may be used alone or in the form of a mixture of two or more thereof.

The thermoplastic polyurethane may be a polyurethane synthesized from a composition containing, besides the above-mentioned essential components, some other polyol, a chain extender, and others as optional components. However, in order to improve the hydrolysis resistance of the supercritical foamed elastic body, it is preferred that the thermoplastic polyurethane is a polyurethane synthesized from a composition which does not contain any adipate polyol.

As the chain extender, use is made of a bifunctional chain extender having, at both terminals thereof, active hydrogen. Specific examples thereof include aliphatic diols such as ethylene glycol, propylene glycol, 1,4-butanediol, 1,3-butanediol, 1,6-hexanediol, 3-methyl 1,5-pentanediol, neopentyl glycol, methyloctanediol, and 1,9-nonanediol; alicyclic diols such as 1,4-cyclohexanedioi; and aromatic diols such as 1,4-bis(β-hydroxyethoxy)benzene, hydroquinone, resorcin, chlorohydroquinone, bromohydroquinone, methylhydroquinone, phenylhydroquinone, methoxyhydroquinone, phenoxyhydroquinone, 4,4'-dihydroxybiphenyl, 4,4'-dihydroxydiphenyl ether, 4,4'-dihydroxydiphenylsulfide, 4,4'-dihydroxydiphenylsulfone, 4,4'-dihydroxybenzophenone, 4,4'-dihydroxydiphenylmethane, bisphenol A, 1,1-di(4-hydroxyphenyl)cyclohexane, 1,2-bis(4-hydroxyphenoxy)ethane, 1,4-dihydroxynaphthalene, and 2,6-dihydroxynaphthalene. These chain extenders may be used alone or in the form of a mixture of two or more thereof.

The isoeyanate-terminated prepolymer may be a prepolymer synthesized from a polyether polyol and a polyisocyanate as essential components. This polyether polyol, as well as this polyisocyanate, may be any one of the same examples as described above. About the molecular weight of the isocyanate-terminated prepolymer, the number-average molecular weight thereof is preferably 3000 or less, more preferably 2000 or less. If the number-average molecular weight is more than 3000, the resistance of the supercritical foamed elastic body against permanent set-in fatigue may deteriorate.

By contrast, the lower limit of the number-average molecular weight of the isocyanate-terminated prepolymer is not particularly limited. Preferably, the number-average molecular weight is equal or similar to any number-average molecular weight that permits the prepolymer to be in a solid state at normal temperature, and is specifically 550 or more.

If necessary, the thermoplastic polyurethane composition may contain, besides the thermoplastic polyurethane and the isocyanate-terminated prepolymer, optional components, such as a thermoplastic resin other than the polyurethane, a plasticizer, a dispersing agent, a compatibility accelerator, a crosslinking agent, a crosslinking aid, a process oil, a pigment, an antioxidant, a reinforcing material, a colorant, a hydrolysis inhibitor, and a foaming adjustor.

Examples of the thermoplastic resin include polystyrene, butadiene-styrene copolymer, acrylonitrile-styrene copolymer, acrylonitrile-butadiene-styrene copolymer, polyethylene, polypropylene, polyvinyl chloride, polyvinylidene chloride, polybutene, polycarbonate, polyacetal, polyphenylene sulfide, polyphenylene ether, polyphenylene oxide, polyvinyl alcohol, polymethyl methacrylate, polyester, polyamide, polyimide, polyethersulfone, and polyetheretherketone and the like.

When the thermoplastic resin is used together with the thermoplastic polyurethane, the content of the thermoplastic resin is preferably 20 parts or less by weight, more preferably 10 parts or less by weight for 100 parts by weight of the thermoplastic polyurethane in order that properties of the polyurethane can be kept good.

The following will describe the non-foamed elastic body 4b, which is one of the constituting materials of the cylindrical elastic member 4 according to the present invention. The material which constitutes the non-foamed elastic body 4b is not particularly limited as far as the material is an injection-moldable material. Examples thereof include rubber, thermoplastic polyurethane, and various thermoplastic resins.

Of these examples, thermoplastic polyurethane is preferably used as the material of the non-foamed elastic body 4b in the case of using, as the foamed elastic bodies 4a, supercritical foamed elastic bodies obtained from a thermoplastic polyurethane composition as a raw material as described above. In this case, the non-foamed elastic body 4b and the supercritical foamed elastic bodies are made of the materials of the same polyurethane type, respectively, so that, in particular, the adhesive property therebetween tends to be improved. The specific gravity of the non-foamed elastic body 4b is, for example, from 0.9 to 1.2.

The cylindrical elastic member 4 according to the present invention is excellent in not only damping property but also endurance; thus, the member is particularly useful as elastic bodies for a vibration proof device, such as a strut mount, an upper support and a bound stopper.

The following will describe a strut mount having the cylindrical elastic member 4 according to the present invention.

As illustrated in FIG. 1, the strut mount according to the present invention has an inner cylindrical section 2 attached to an operating axis 1 as an axial center, an outer cylindrical section 3 arranged outside the inner cylindrical section 2 concentrically therewith, so as to be apart from the inner cylindrical section 2 and surround the section 2, and the above-mentioned cylindrical elastic member 4.

As described above, since the cylindrical elastic member 4 according to the present invention is excellent in not only damping property but also endurance, the strut mount having this member is also excellent in not only damping property but also endurance. Hereinafter, a method for producing the strut mount according to the present invention will be described.

First, the inner cylindrical section 2 attached to the operating axis 1, and the outer cylindrical section 3 are arranged to be apart from each other and concentrically with each other in such a manner that the section 3 surrounds the section 2 at the outside of the section 2. Next, the non-foamed elastic body 4b is formed to make a contacting-surface area with the outer circumferential end-region of the inner cylindrical section 2 (a first step). Preferably, in the first step, the non-foamed elastic body 4b is formed to make the whole of a contacting-surface with the inner cylindrical section 2. The method for forming the non-foamed elastic body 4b is not particularly limited, and is preferably a method of injection-molding a raw composition of the non-foamed elastic body 4b. Next, the foamed elastic bodies 4a are formed to make respective contacting-surface areas with both the operating-axis-direction inside surfaces of the outer cylindrical section 3 (a second step).

Preferably, in the second step, after the formation of the non-foamed elastic body 4b, the foamed elastic bodies 4a are formed while the bodies 4a are bonded to the non-foamed elastic body 4b by themselves. In order to attain the bonding between the non-foamed elastic body 4b and the foamed elastic bodies 4a by themselves with a higher certainty, it is preferred that the foamed elastic bodies 4a are each formed by injection-molding the raw composition thereof and the expression of $T2 - T1 \geqq 50$ (°C) is satisfied wherein $T1$ represents the softening point of the non-foamed elastic body 4b and $T2$ represents the resin temperature of the foamed elastic bodies 4a at the time of the injection molding. The non-foamed elastic body 4b used in the present invention is, for example, a non-foamed elastic body having a softening point $T1$ of 50 to 110°C.

The method for forming the foamed elastic bodies 4a is not particularly limited, and is preferably a method of injection-molding the raw composition of the foamed elastic bodies 4a in the same manner as in the method for forming the non-foamed elastic body 4b. Particularly preferred is a method of mixing an unreactive gas in a supercritical state with a thermoplastic polyurethane composition in a melted state to yield an unreactive-gas-dissolved thermoplastic polyurethane composition, and then injection-molding the composition. Any supercritical foamed elastic body produced by this method is in a uniformly foamed state and has a high independent bubble percentage; thus, the body is excellent in not only damping property but also endurance. Hereinafter, a method for forming this supercritical foamed elastic body will be described.

A process for forming the supercritical foamed elastic body includes a melting step of heating a thermoplastic polyurethane composition into a melted state, a dissolving step of mixing an unreactive gas in a supercritical state with the thermoplastic polyurethane composition in the melted state, thereby preparing an unreactive-gas-dissolved thermoplastic polyurethane composition, and an injection molding step of injection-molding the unreactive-gas-dissolved thermoplastic polyurethane composition.

Melting step

First, in the melting step, a thermoplastic polyurethane composition is heated into a melted state. Specifically, a thermoplastic polyurethane composition is fed into a resin melting cylinder of an injection molding machine through a hopper or some other, and the composition is heated into a melted state at not lower than the melting point or the plasticizing temperature of the thermoplastic polyurethane composition, specifically a temperature of 160 °C to 240°C.

Dissolving step

Next, in the dissolving step, an unreactive gas in a supercritical state is mixed with the thermoplastic polyurethane composition in the melted state to prepare an unreactive-gas-dissolved thermoplastic polyurethane composition. Specifically, an unreactive gas, such as nitrogen gas or carbon dioxide gas, in a supercritical state is mixed with the thermoplastic polyurethane composition kept in the melted state in the resin melting cylinder of the injection molding machine, thereby preparing an unreactive-gas-dissolved thermoplastic polyurethane composition.

For example, the unreactive gas in the supercritical state is injected into a constant rate pump from an oxygen bomb in which the unreactive gas that is in a liquefied state (or gasified state) is stored; a pressure of the gas is raised in the constant rate pump; and then the gas is mixed with the thermoplastic polyurethane composition kept in the melted state in the resin melting cylinder of the injection molding machine. In a case where at this time the unreactive gas present in the resin melting cylinder is in a supercritical state, an improvement is largely made in effect that the gas is dissolved and diffused into the melted thermoplastic polyurethane composition.

Thus, the gas penetrates into the melted thermoplastic polyurethane resin composition in a short period. In the dissolving step, the setting temperature of the inside of the resin melting cylinder of the injection molding machine is preferably set into the range of 165 °C to 245 °C in order to set the temperature of the unreactive-gas-dissolved thermoplastic polyurethane composition into the range of 160 °C to 240 °C.

In the dissolving step, the blend ratio of the unreactive gas into the thermoplastic polyurethane composition is preferably from 0.01 to 5 % by weight, more preferably from 0.05 to 3 % by weight. This production process gives a supercritical foamed elastic body having a desired specific gravity, specifically, a supercritical foamed elastic body having a specific gravity of 0.40 to 0.8.

Injection molding step

Next, in the injection molding step, the unreactive-gas-dissolved thermoplastic polyurethane composition is injection-molded to make contacting-surface areas with both operating-axis-direction inside surfaces of the outer cylindrical section 3. Specifically, the unreactive-gas-dissolved thermoplastic polyurethane composition present in the resin melting cylinder of the injection molding machine is fed into, for example, an injecting device having an injecting plunger, and then the composition is weighed by use of this injecting device. Thereafter, the composition is injection-molded.

As illustrated in FIG. 1, in the strut-mount-producing method according to the present embodiment, the cylindrical elastic member 4 is formed in such a manner that contacting-surfaces of the non-foamed elastic body 4b and the foamed elastic bodies 4a between the body 4b and the bodies 4a extend substantially perpendicularly to the operating axis direction. This manner makes it possible to prevent the cylindrical elastic member 4 effectively from being cracked. As a result, a strut mount excellent in endurance can be produced.

Examples

Hereinafter, a description will be made about examples demonstrating the structure and the advantageous effects of the present invention specifically. Various properties of any cylindrical elastic member 4 having foamed elastic bodies 4a and a non-foamed elastic body 4b were evaluated as follows:

(1) Independent bubble percentage

Any one of the foamed elastic bodies 4a was cut into the form of a sample 20 mm x 20 mm x 25 mm in size in such a manner that its skin layer would not be contained in the sample. An air comparison pycnometer model 930 (manufactured by Beckman Coulter Inc.) was used to make a measurement. The independent bubble percentage was calculated on the basis of a counter value obtained by the measurement and the volume value of the sample from the following equation:

$$\text{Independent bubble percentage (\%)} =$$
$$100 \times [\text{counter value}]/[\text{sample volume value}]$$

(2) Specific gravity

Any one of the foamed elastic bodies 4a, and the non-foamed elastic body 4b were each cut into the form of a column 30 mm in diameter and 12.5 mm in thickness in such a manner that its skin layer would not be contained in the column. The specific gravity thereof was measured by Sartorius-LA230S.

(3) Endurance (the number of times of vibrating, and a crack depth at a cracked region when the cylindrical elastic member came to have a static spring constant Ks (N/mm) change ratio of 25 %)

Samples were beforehand made which each had a shape as obtained by cutting the cylindrical elastic member 4 ($H_{total}$ = 36 mm, H = 14 mm, outside diameter R1: 55 mm, and inside diameter R2; 33 mm) illustrated in FIG. 2 in half along the operating axis direction (vertical direction in FIG. 2). The two samples, which each had the half shape, were put onto each other in the operating axis direction, thereby forming the above-mentioned cylindrical elastic member 4, as shown in FIG. 2.

This cylindrical elastic member 4 was set in an outer cylindrical section 3 of a vibrating device having the same structure as the strut mount illustrated in FIG. 1, so as to sandwich an inner cylindrical section 2 of the device. Thereafter, vibrations were given thereto at a load of $\pm$ 4900 N and an applied vibration frequency of 2 Hz, the number of the given vibrations (times n of the vibrating) being selected at will. The static spring constant at this time was measured. A ratio of a change in the static spring constant was calculated out from the following equation:

$$\text{Static spring constant change ratio (\%)} = 100 \times ((\text{static spring constant}$$
$$\text{after the cylindrical elastic member was vibrated n times}) - (\text{static spring}$$
$$\text{constant before the vibrating}))/(\text{static spring constant before the vibrating})$$

The endurance of the cylindrical elastic member 4 was evaluated on the basis of the number of times of the vibrating when the calculated static spring constant change ratio turned to 25 %, and the crack depth (mm) at a cracked region generated when this ratio turned to 25 %. As the number of times of the vibrating is larger or the crack depth at the cracked region is smaller, the endurance of the cylindrical elastic member is better.

(4) Damping property (loss factor/dynamic magnification ratio)

The damping property was evaluated on the basis of the value obtained by dividing the loss factor (tan$\delta$) by the dynamic ratio (= the dynamic spring constant Kd (N/mm) obtained when the cylindrical elastic member was vibrated at frequency of 100 Hz)/the static spring constant Ks (N/mm)). As this value is larger, the damping property of the cylindrical elastic member 4 is better. The static spring constant Ks (N/mm), the dynamic spring constant Kd (N/mm), and the loss factor each used to evaluate the damping property were measured by the following methods:

(i) Static spring constant Ks (N/mm)

In a bidirectional loading manner of a static property test in accordance with JIS K6385, at normal temperature, from a start when the cylindrical elastic member 4 was in the state that a predetermined load was given to the member, a deflection or flexure in the range of $\pm$ 4900 N was loaded 3 times to the member 4 at a displacement speed of 10 mm/ minute. A relationship between the load and the deflection in the third-time loading was measured, and this relationship was used to calculate the static spring constant according to the calculating method described in JIS K6385.

(ii) Dynamic spring constant Kd (N/mm)

In a non-resonance manner of a dynamic property measuring test in accordance with JIS K6385, at normal temperature, from a start when the cylindrical elastic member 4 was in the state that a predetermined load was given to the member, a deflection or flexure having a frequency of 100 Hz and an amplitude of $\pm$ 0.05 mm was loaded to the member 4. A relationship between the load and the deflection was measured, and this relationship was used to calculate the dynamic spring constant according to the calculating method described in JIS K6385.

(iii) Loss factor (tan$\delta$)

In the non-resonance manner of the dynamic property measuring test in accordance with JIS K6385, at normal temperature, from a start when the cylindrical elastic member 4 was in the state that a predetermined load was given to the member, a deflection or flexure having a frequency of 15 Hz and an amplitude of $\pm$2.0 mm was loaded to the member 4. A relationship between the load and the deflection was measured, and this relationship was used to calculate the loss factor according to the calculating method described in JIS K6385.

Example 1

In a mold having the same shape as obtained by cutting the cylindrical elastic member 4 illustrated in FIG. 2 in half along the operating axis direction (vertical direction in FIG. 2), the whole of a (cylindrical elastic body) contacting-surface with an inner cylindrical section 2 was formed by use of a non-foamed elastic body 4b. This non-foamed elastic body 4b was formed to give a height H2 of 2.5 mm by drying, at 90 °C for 5 hours or more, a thermoplastic polyurethane ("ESTANE-58881", manufactured by Lubrizol Co.) synthesized from a composition containing polytetramethylene glycol, 1,4-bis($\beta$-hydroxyethoxy)benzene, and diphenylmethanediisocyanate, and then molding the resin by an ordinary injection molding.

Next, the following were fed from a hopper of a MuCell type injection molding machine (manufactured by the Japan Steel Works, Ltd.) into a resin melting cylinder so as to be melted: 100 parts by weight of a thermoplastic polyurethane ("PH-2285", manufactured by Dainichiseika Color & Chemicals Mfg. Co., Ltd.) synthesized from a composition containing polyether and diphenylmethanediisocyanate; and 5 parts by weight of an isocyanate-terminated prepolymer ("CROSSNATE EM30" (number-average molecular weight: 1800), manufactured by Dainichiseika Color & Chemicals Mfg. Co., Ltd.) synthesized from a composition containing polytetramethylene glycol and diphenylmethanediisocyanate. Furthermore, a nitrogen gas in a supercritical state was fed into the resin melting cylinder to give a weight-proportion of 0.1 % by weight of the thermoplastic polyurethane composition, so as to be mixed with the above-mentioned melted mixture. Thereafter, the resultant was injection-molded into the mold, which had the same shape as obtained by cutting the cylindrical elastic member 4 illustrated in FIG. 2 in half along the operating axis direction, to form a cylindrical elastic member 4 (H1 = 12 mm, and H1 = 0.828H) in which foamed elastic bodies 4a (supercritical foamed elastic bodies) were bonded to the non-foamed elastic body 4b by themselves, and further contacting-surfaces of the non-foamed elastic body 4b and the foamed elastic bodies 4a between the body 4b and the bodies 4a extended substantially perpendicularly to the operating axis direction. This cylindrical elastic member 4 was used to evaluate the above-mentioned properties. The results are shown in Table 1.

Example 2

A cylindrical elastic member 4 was formed in the same way as in Example 1 except that the non-foamed elastic body 4b was formed by use of a thermoplastic polyurethane ("E380-MNAT"), manufactured by Nippon Polyurethane Industry Co., Ltd.) synthesized from a composition containing polytetramethylene glycol, 1,4-butanediol and diphenylmethanediisocyanate. This cylindrical elastic member 4 was used to evaluate the above-mentioned properties. The results are shown in Table 1.

Comparative Example 1

A cylindrical elastic member 4 having the same shape as in Example 1 was formed by use of only a foamed elastic body 4a (supercritical foamed elastic body) composed of 100 parts by weight of the thermoplastic polyurethane ("PH-2285", manufactured by Dainichiseika Color & Chemicals Mfg. Co., Ltd.), which was synthesized from the composition containing polyether and diphenylmethanediisocyanate, and 5 parts by weight of the isocyanate-terminated prepolymer ("CROSSNATE EM30" (number-average molecular weight: 1800), manufactured by Dainichiseika Color & Chemicals Mfg. Co., Ltd.), which was synthesized from the composition containing polytetramethylene glycol and diphenylmethanediisocyanate. This cylindrical elastic member 4 was used to evaluate the above-mentioned properties. The results are shown in Table 1.

Comparative Example 2

A cylindrical elastic member 4 having the same shape as in Example 1 was formed by use of only a foamed elastic body 4a (supercritical foamed elastic body) composed of 100 parts by weight of the thermoplastic polyurethane ("E380-MNAT"), manufactured by Nippon Polyurethane Industry Co., Ltd.), which was synthesized from the composition containing polytetramethylene glycol, 1,4-butanediol and diphenylmethanediisocyanate, and 10 parts by weight of the isocyanate-terminated prepolymer ("CROSSNATE EM30" (number-average molecular weight: 1800), manufactured by Dainichiseika Color & Chemicals Mfg. Co., Ltd.), which was synthesized from the composition containing polytetramethylene glycol and diphenylmethanediisocyanate. This cylindrical elastic member 4 was used to evaluate the above-mentioned properties. The results are shown in Table 1.

Comparative Example 3

A cylindrical elastic member 4 was formed in the same way as in Example 1 except that a non-foamed elastic body 4b was formed to give a height H2 of 1.0 mm, and foamed elastic bodies 4a (supercritical foamed elastic bodies) were each formed to give a height H1 of 13.5 mm (H1 = 0.931H). This cylindrical elastic member 4 was used to evaluate the above-mentioned properties. The results are shown in Table 1.

Comparative Example 4

A cylindrical elastic member 4 was formed in the same way as in Example 1 except that a non-foamed elastic body 4b was formed to give a height H2 of 10.0 mm, and foamed elastic bodies 4a (supercritical foamed elastic bodies) were each formed to give a height H1 of 4.5 mm (H1 = 0.310H). This cylindrical elastic member 4 was used to evaluate the above-mentioned properties. The results are shown in Table 1.

Table 1

| | Example 1 | Example 2 | Comparative Example 1 | Comparative Example 2 | Comparative Example 3 | Comparative Example 4 |
|---|---|---|---|---|---|---|
| H1/H | 0.828 | 0.828 | 1.0 | 1.0 | 0.931 | 0.310 |
| H2/H | 0.172 | 0.172 | 0.0 | 0.0 | 0.069 | 0.690 |
| Non-foamed elastic body specific gravity | 1.09 | 1.11 | - | - | 1.09 | 1.09 |
| Foamed elastic body specific gravity | 0.63 | 0.61 | 0.61 | 0.62 | 0.62 | 0.64 |
| Foamed elastic body independent bubble percentage | 87.4 | 85.3 | 85.6 | 86.6 | 85.9 | 88.4 |
| Crack depth (mm) at a cracked region generated when the static spring constant change ratio turned into 25% | 0 (mm) | 0 (mm) | 6 (mm) | 6 (mm) | 4 (mm) | 0 (mm) |
| The number of times of the vibrating when the static spring constant change ratio turned into 25% | $190 \times 10^4$ (times) | $210 \times 10^4$ (times) | $2 \times 10^4$ (times) | $7 \times 10^4$ (times) | $15 \times 10^4$ (times) | $190 \times 10^4$ (times) |
| Loss factor/ dynamic magnification ratio | 0,12 | 0.10 | 0.08 | 0.07 | 0.08 | 0.04 |

From the results in Table 1, it was understood that even when the cylindrical elastic members 4 according to Examples 1 and 2 were repeatedly vibrated $100 \times 10^4$ times or more, the members 4 were not cracked so that the members were excellent in endurance and damping property. Similarly, it was understood that strut mounts having the cylindrical elastic members 4 according to Examples 1 and 2, respectively, were excellent in endurance and damping property.

By contrast, it was understood that the cylindrical elastic members 4 according to Comparative Examples 1 and 2 were cracked when the number of times of the vibrating was 10 x 10⁴ or less, so as to deteriorate in endurance since their foamed elastic bodies 4a each contacted the outer circumferential end-region of the inner cylindrical section 2. Furthermore, the cylindrical elastic members 4 according to Comparative Examples 1 and 2 became poorer in damping property than the cylindrical elastic members 4 according to Examples 1 and 2.

It was understood that the cylindrical elastic member 4 according to Comparative Example 3 was cracked when the number of times of the vibrating was about $15 \times 10^4$, so as to deteriorate in endurance since the operating-axis-direction thickness of the non-foamed elastic body 4b contacting the inner cylindrical section 2 was small. Furthermore, the cylindrical elastic member 4 according to Comparative Example 3 became poorer in damping property than the cylindrical elastic members 4 according to Examples 1 and 2.

The cylindrical elastic member 4 according to Comparative Example 4 became poorer in damping property than the cylindrical elastic members 4 according to Examples 1 and 2 since the operating-axis-direction thickness of the foamed elastic bodies 4a was small.

Reference Numbed List

1 = operating axis
2 = inner cylindrical section
3 = outer cylindrical section
4 = cylindrical elastic member
4a = foamed elastic bodies
4b = non-foamed elastic body

**Claims**

1. A cylindrical elastic member for connecting an inner cylindrical section attached to an operating axis as an axial center to an outer cylindrical section arranged outside the inner cylindrical section concentrically therewith, so as to be apart from the inner cylindrical section and surround the section, the member comprising a non-foamed elastic body and a foamed elastic body,
about which in a contacting-surface of the member with the inner cylindrical section, at least a contacting-surface area with an outer circumferential end-region of the inner cylindrical section comprises the non-foamed elastic body, and
in a contacting-surface of the member with the outer cylindrical section, at least contacting-surface areas with both operating-axis-direction inside surfaces of the outer cylindrical section each comprise the foamed elastic body.

2. The cylindrical elastic member according to claim 1,
wherein the whole of the contacting-surface of the member with the inner cylindrical section comprises the non-foamed elastic body.

3. The cylindrical elastic member according to claim 2,
wherein contacting-surfaces of the non-foamed elastic body and the foamed elastic body between these bodies extend substantially perpendicularly to the direction of the operating axis.

4. The cylindrical elastic member according to claim 1,
wherein the non-foamed elastic body and the foamed elastic body are bonded to each other by themselves.

5. The cylindrical elastic member according to claim 1,
wherein the following is satisfied: $0.4H \leqq H1 \leqq 0.9H$ in which H represents the height, in the operating axis direction, from the contacting-surface area with any one of the operating-axis-direction inside surfaces of the outer cylindrical section to the contacting-surface of the member with the inner cylindrical section, and H1 represents the height, in the operating axis direction, from the contacting-surface area with the operating-axis-direction inside surface of the outer cylindrical section to the contacting-surface of the non-foamed elastic body and the foamed elastic body therebetween.

6. A strut mount, comprising an inner cylindrical section attached to an operating axis as an axial center, an outer cylindrical section arranged outside the inner cylindrical section concentrically therewith, so as to be apart from the inner cylindrical section and surround the section, and a cylindrical elastic member comprising a non-foamed elastic body and a foamed elastic body to connect the inner cylindrical section and the outer cylindrical section to each other, the cylindrical elastic member being a cylindrical elastic member about which in a contacting-surface of the member with the inner cylindrical section, at least a contacting-surface area with an outer circumferential end-region of the inner cylindrical section comprises the non-foamed elastic body, and in a contacting-surface of the member with the outer cylindrical section, at least contacting-surface areas with both operating-axis-direction inside surfaces of the outer cylindrical section each comprise the foamed elastic body.

**7.** The strut mount according to claim 6,
wherein the whole of the contacting-surface of the member with the inner cylindrical section comprises the non-foamed elastic body.

**8.** The strut mount according to claim 7,
wherein contacting-surfaces of the non-foamed elastic body and the foamed elastic body between these bodies extend substantially perpendicularly to the direction of the operating axis.

**9.** The strut mount according to claim 6,
wherein the non-foamed elastic body and the foamed elastic body are bonded to each other by themselves.

**10.** The strut mount according to claim 6,
wherein the following is satisfied: $0.4H \leqq H1 \leqq 0.9H$ in which H represents the height, in the operating axis direction, from the contacting-surface area with any one of the operating-axis-direction inside surfaces of the outer cylindrical section to the contacting-surface of the member with the inner cylindrical section, and H1 represents the height, in the operating axis direction, from the contacting-surface area with the operating-axis-direction inside surface of the outer cylindrical section to the contacting-surfaces of the non-foamed elastic body and the foamed elastic body therebetween.

**11.** A method for producing a strut mount which comprises an inner cylindrical section attached to an operating axis as an axial center, an outer cylindrical section arranged outside the inner cylindrical section concentrically therewith, so as to be apart from the inner cylindrical section and surround the section, and a cylindrical elastic member comprising a non-foamed elastic body and a foamed elastic body to connect the inner cylindrical section and the outer cylindrical section to each other, the method comprising:

- a first step of forming the non-foamed elastic body to make at least a contacting-surface area of the member with an outer circumferential end-region of the inner cylindrical section, and
- a second step of forming the foamed elastic body to make at least contacting-surface areas of the member with both operating-axis-direction inside surfaces of the outer cylindrical section.

**12.** The strut mount producing method according to claim 11,
wherein the second step is a step in which after the formation of the non-foamed elastic body, the foamed elastic body is formed while the foamed elastic body and the non-foamed elastic body are bonded to each other by themselves.

FIG.1

FIG.2

FIG.3

## INTERNATIONAL SEARCH REPORT

| International application No. |
| --- |
| PCT/JP2009/070979 |

A. CLASSIFICATION OF SUBJECT MATTER
*F16F1/36*(2006.01)i, *F16F1/37*(2006.01)i, *F16F9/54*(2006.01)i, *F16F15/08*
(2006.01)i

According to International Patent Classification (IPC) or to both national classification and IPC

B. FIELDS SEARCHED

Minimum documentation searched (classification system followed by classification symbols)
F16F1/00-3/00, F16F9/54, F16F15/08

Documentation searched other than minimum documentation to the extent that such documents are included in the fields searched
Jitsuyo Shinan Koho        1922-1996   Jitsuyo Shinan Toroku Koho   1996-2010
Kokai Jitsuyo Shinan Koho  1971-2010   Toroku Jitsuyo Shinan Koho   1994-2010

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 2008-196611 A  (Toyo Tire and Rubber Co.,<br>Ltd.),<br>28 August 2008 (28.08.2008),<br>paragraphs [0006], [0015] to [0025]; fig. 1 to<br>3<br>(Family: none) | 1-2<br>3-12 |
| Y | JP 2003-184937 A  (Tokai Rubber Industries,<br>Ltd.),<br>03 July 2003 (03.07.2003),<br>paragraphs [0018] to [0020]; fig. 1<br>(Family: none) | 3-12 |

| ☒  Further documents are listed in the continuation of Box C. | ☐  See patent family annex. |
| --- | --- |

| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |
| --- | --- |

| Date of the actual completion of the international search<br>12 March, 2010 (12.03.10) | Date of mailing of the international search report<br>23 March, 2010 (23.03.10) |
| --- | --- |
| Name and mailing address of the ISA/<br>   Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2009/070979

| | C (Continuation). DOCUMENTS CONSIDERED TO BE RELEVANT | |
|---|---|---|
| Category* | Citation of document, with indication, where appropriate, of the relevant passages | Relevant to claim No. |
| A | Microfilm of the specification and drawings annexed to the request of Japanese Utility Model Application No. 36785/1982(Laid-open No. 138832/1983) (Toyo Kogyo Co., Ltd.), 19 September 1983 (19.09.1983), entire text; fig. 1 to 4 (Family: none) | 1-12 |
| A | JP 4-357342 A (Kubota Corp.), 10 December 1992 (10.12.1992), entire text; fig. 1 to 3 (Family: none) | 1-12 |
| A | JP 60-220234 A (Yamashita Rubber Co., Ltd.), 02 November 1985 (02.11.1985), entire text; fig. 1 to 2 (Family: none) | 1-12 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002264622 A
- JP 2003184937 A
- JP 2004293697 A